# FASCICULE DE BREVET EUROPEEN

(11) **EP 1 493 497 B1**
(45) Date de publication et mention de la délivrance du brevet: **02.07.2008**
(21) Numéro de dépôt: 04291324.4
(22) Date de dépôt: 26.05.2004
(51) Int. Cl.: B05C 19/04

(54) **Applicateur de poudre pour cable**
Pulverapplikator für Kabel
Powder applicator for cables

(30) Priorité: 30.06.2003 FR 0307884
(43) Date de publication de la demande: 05.01.2005
(73) Titulaire: Draka Comteq B.V., 1083 HJ Amsterdam (NL)
(72) Inventeur: Fleury, Daniel, 62100 Calais (FR)
(74) Mandataire: Blokland, Arie

(56) Documents cités:
- DE-A- 3 246 487
- GB-A- 133 697
- GB-A- 932 923
- GB-A- 1 220 427
- GB-A- 1 378 748
- GB-A- 2 167 002
- US-A- 3 389 010
- US-A- 4 597 358

## Description

L'invention concerne le domaine des applicateurs de poudre absorbant l'humidité sur des éléments de câble ainsi que le domaine des procédés d'application de poudre absorbant l'humidité sur des éléments de câble. Cette poudre a pour fonction, une fois le câble réalisé, d'absorber l'humidité se trouvant au niveau de certains éléments du câble afin d'empêcher cette humidité de détériorer les propriétés de ces éléments de câble et d'empêcher cette humidité de se propager le long de ces éléments de câble.

Selon un art antérieur, il est connu de faire passer des éléments de câble comme des fibres optiques ou des tubes contenant des fibres optiques dans un cylindre d'environ 600mm de long relié à un réservoir de poudre absorbant l'humidité. Le réservoir de pourdre est situé en partie basse de la machine. La poudre est ensuite aspirée par un système d'aspiration de type Venturi, l'aspiration étant réalisée avec de l'air filtré et nécessitant une régulation de pression pour obtenir un débit de poudre qui soit suffisant. Puis, la poudre véhiculée est injectée dans le cylindre par pression régulable pour obtenir la quantité nécessaire de poudre sur les éléments de câble. La poudre est alors déposée sur les éléments de câble lors de leur passage dans le cylindre par l'intermédiaire de jets radiaux de poudre qui est véhiculée par un gaz comprimé comme de l'air comprimé et latéralement injecté sur les éléments de câble. Des moyens actifs sont nécessaires pour générer ce gaz comprimé destiné à véhiculer la poudre. Un inconvénient de cet art antérieur est que, comme la poudre est véhiculée par un gaz sous pression, ladite poudre est dispersée dans une large zone au voisinage de l'applicateur et du câble en train d'être assemblé. Par conséquent, d'autres machines ou appareils situés au voisinage de l'applicateur risquent d'être contaminés par la poudre et risquent de nécessiter de fréquents arrêts pour nettoyage, ce qui est gênant. Par ailleurs, la présence de poudre sur le sol dans un périmètre de plusieurs mètres autour de l'applicateur entraîne des risques de chute pour les opérateurs évoluant au voisinage de l'applicateur. Un autre inconvénient est d'obtenir un débit de poudre relativement irrégulier sur les éléments de câble.

DE 32 46 487 divulge un applicateur de poudre sur des éléments de câble, comprenant, une trémie destinée à contenir la poudre, une grille, un agitateur mécanique de poudre situé à l'intérieur de la trémie et un tube située en aval de la grille et coaxial avec la trémie, ledit tube étant destiné à guider la poudre entre la grille et les éléments de câble.

GB 133,697 divulge un applicateur de poudre selon le préambule de la revendication 1.

Pour résoudre ou tout au moins diminuer tout ou partie de ces problèmes, l'invention propose un applicateur et un procédé d'application différents. Au lieu de véhiculer la poudre par un gaz sous pression pour l'injecter latéralement, l'invention est basée sur une application par chute verticale à l'aide d'un agitateur mécanique situé dans une trémie, le mouvement de l'agitateur mécanique, qui est une pièce mécanique dont le mouvement dans la trémie agite la poudre contenue dans la trémie, suffisant à faire écouler la poudre par gravité jusque sur les éléments de câble. L'applicateur selon l'invention, fonctionnant par gravité, a également le mérite d'être plus simple que celui de l'art antérieur, notamment au niveau de son réglage et de son utilisation. Un petit inconvénient est qu'il faut veiller, lors d'un arrêt de l'applicateur qui se prolongerait pendant de nombreuses heures, à remplacer la poudre située dans la trémie de l'applicateur, car sinon ladite poudre risquerait de prendre l'humidité et de former des grumeaux.

Selon l'invention, il est prévu un applicateur de poudre absorbant l'humidité, sur des éléments de câble, comprenant, une trémie destinée à contenir la poudre, ladite trémie comprenant une petite ouverture située dans sa partie basse, une grille située dans la petite ouverture de la trémie, un agitateur mécanique de poudre situé à l'intérieur de la trémie, l'agitateur étant mobile en rotation par rapport à la trémie autour d'un axe de rotation, l'agitateur étant disposé dans la trémie de manière à pouvoir faire écouler la poudre à travers la grille par gravité, un tube située en aval de la grille et coaxial avec la trémie, ledit tube étant destiné à guider la poudre entre la grille et les éléments de câble, laquelle poudre, ayant traversé la grille, est véhiculée dans le tube par gravité jusqu'aux éléments de câble, caractérisé en ce que la trémie est en forme de cône droit de révolution et en ce que l'agitateur comprend deux parties solidaires entre elles et angulairement décalées entre elles, lesdites parties étant disposées de manière à ce qu'une partie soit apte à remuer la poudre destinée à être contenue dans la trémie et à ce que l'autre partie soit apte à fluidifier l'écoulement de la poudre au niveau de la grille.

Selon l'invention, il est également prévu un procédé d'application de poudre absorbant l'humidité, sur des éléments de câble, le procédé comprenant une étape de mise de la poudre dans une trémie d'un applicateur, ladite trémie comprenant une petite ouverture située dans sa partie basse et une étape de mise en mouvement d'un agitateur mécanique situé à l'intérieur de la trémie de l'applicateur, l'agitateur étant mobile en rotation par rapport à la trémie autour d'un axe de rotation, et en ce que la poudre contenue dans la trémie, s'écoule par gravité jusqu'à une grille située dans la petite ouverture de la trémie en étant agitée par l'agitateur, traverse la grille, et continue de s'écouler la poudre par un tube située en aval de la grille et coaxial avec la trémie, ledit tube étant destiné à guider le poudre entre la grille et les éléments de câble, laquelle poudre est véhiculée dans le tube uniquement par gravité jusqu'à arriver au contact des éléments de câble caractérisé en ce que la trémie est en forme de cône droit de révolution et en ce que l'agitateur comprend deux parties solidaires entre elles et angulairement décalées entre elles, lesdites parties étant disposées de manière à ce qu'une partie soit apte à remuer la poudre destinée à être contenue dans la trémie et à ce que l'autre partie soit apte 's fluidifier l'écoulement de la poudre au niveau de la grille.

De préférence, le procédé selon l'invention utilise l'applicateur selon l'invention.

Afin de faciliter l'écoulement de la poudre au travers de la grille tout en maintenant un débit relativement régulier de poudre tombant sur les éléments de câble, de préférence, l'extrémité de l'agitateur située du côté de la petite ouverture de la trémie est mobile par rapport à la grille, en contact avec la grille et disposée de manière à pouvoir racler la grille de façon à aider la poudre à traverser la grille par gravité.

Pour permettre à la poudre contenue dans la trémie de descendre plus facilement vers la grille, l'agitateur est mobile en rotation par rapport à la trémie autour d'un axe de rotation. Un agitateur en forme de lame vibrante située dans la trémie pourrait être envisagé mais les résultats sont beaucoup moins bons qu'avec un agitateur mobile en rotation, car il y a alors tendance à une formation d'un tunnel autour de la lame vibrante entraînant un compactage de la poudre latéralement contre les parois de la trémie, ce qui se traduit ensuite par des détachements brutaux de blocs de poudre, ce qui rend irrégulier le débit de poudre sur les éléments de câble.

Pour gérer de manière tout à fait fluide l'écoulement de la poudre tout le long de la trémie et la faire traverser facilement la grille, pour à la fois remuer la masse importante de poudre contenue dans l'ensemble de la trémie et pour fluidifier l'écoulement de la poudre au niveau du goulot d'étranglement constitué par la petite ouverture de la trémie et par la grille qui ferme ladite ouverture l'agitateur comprend deux parties planes mobiles en rotation autour de l'axe de rotation, solidaires entre elles et perpendiculaires entre elles. Un léger décalage par rapport à la perpendicularité pourrait être envisagé, mais si lesdites parties de l'agitateur sont parallèles, le couple s'exerçant sur la petite partie située au niveau de la petite ouverture risque d'être trop important ne permettant pas un écoulement fluide de la poudre au niveau dudit goulot d'étranglement. De manière plus générale, l'agitateur comprend de préférence deux parties solidaires entre elles et angulairement décalées entre elles, et disposées de manière à ce que l'une soit apte à remuer la poudre destinée à être contenue dans la trémie et à ce que l'autre partie soit apte à fluidifier l'écoulement de la poudre au niveau de la grille.

L'invention sera mieux comprise et d'autres particularités et avantages apparaîtront à l'aide de la description ci-après et des dessins joints, donnés à titre d'exemples, où :
- la figure 1 représente schématiquement en vue de profil un ensemble comprenant un exemple d'applicateur selon l'invention monté sur son support ;
- la figure 2 représente schématiquement en vue en coupe un agrandissement d'une partie d'un exemple d'applicateur selon l'invention représenté à la figure 1 ;
- la figure 2A représente schématiquement en vue de dessus l'élément 61 de la figure 2 ;
- la figure 2B représente schématiquement en vue de dessus l'élément 9 de la figure 2.

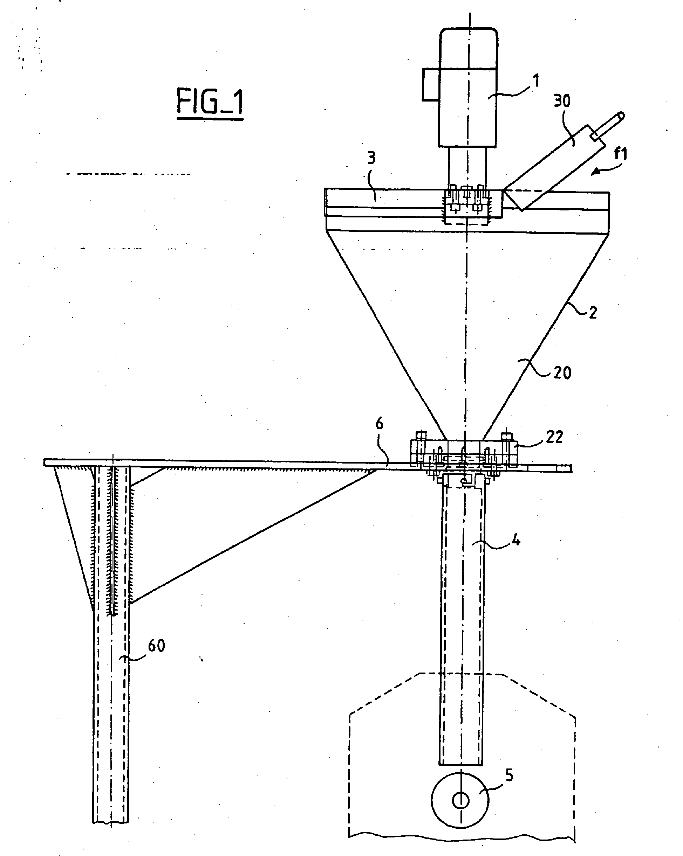

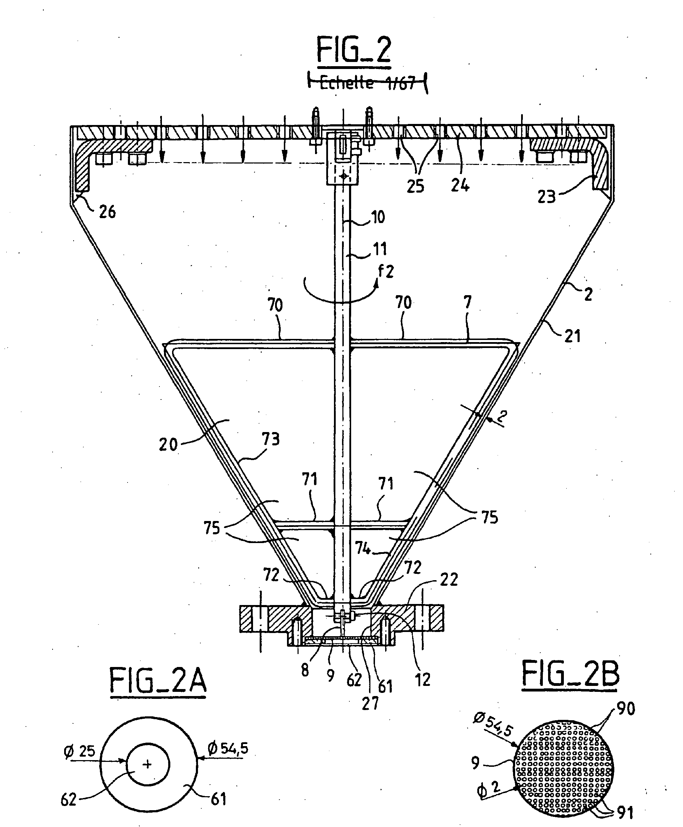

La figure 1 est à l'échelle 1/5. Les figures 2, 2A et 2B, sont à l'échelle 1/2. Le diamètre de la trémie 2 du côté de sa grande ouverture vaut 400mm.

La figure 1 représente schématiquement en vue de profil un ensemble comprenant un exemple d'applicateur selon l'invention monté sur son support. L'applicateur selon l'invention comprend une trémie 2 destinée à contenir une poudre 20 qui est introduite du côté de la grande ouverture de la trémie 2, grande ouverture recouverte par un couvercle 3 dont une partie rabattable 30 permet, lorsqu'elle est ouverte, d'introduire la poudre en suivant la direction de la flèche f1. Du côté de la petite ouverture de la trémie 2, se trouve une bague 22 qui est fixée sur un support 6 lequel est monté sur un pied pivotant 60. Sous le support 6 est fixé un tube 4 destiné à guider la poudre après son passage par la bague 22. Sous l'ouverture basse du tube 4 passe les éléments de câble notés 5, éléments qui peuvent notamment être des fibres optiques, des tubes à fibres optiques notamment des flextubes, qui peuvent être assemblés autour d'un porteur central, des mèches de renfort. Ces éléments 5 de câble défilent sous le tube 4 en suivant une trajectoire de préférence hélicoïdale ou en SZ pour que la poudre soit uniformément répartie sur les éléments 5 tout autour du câble. Un moteur 1 fixé à l'applicateur permet de mettre en mouvement l'agitateur mécanique situé dans la trémie 2 et non représenté sur la figure 1.

La figure 2 représente schématiquement en vue en coupe un agrandissement d'une partie d'un exemple d'applicateur selon l'invention représenté à la figure 1. La trémie 2 comprend une paroi latérale 21 en forme de cône de révolution. La grande ouverture de la trémie 2 est grillagée par une grille 24 comportant des trous 25 par lesquels est introduite la poudre 20 qui tombe par gravité dans la trémie 2. La chute de la poudre 20 tombant par gravité au travers de la grille 24 est représentée par les flèches verticales traversant les trous 25. La grille 24 est fixée à des montants 23 reposant sur les bords saillants 26 de la trémie 2. La petite ouverture de la trémie 2 se finit par l'alésage 27 de la bague 22. Dans les petite ouverture de la trémie 2 est située dans une grille 9 reposant sur une rondelle 61 comprenant en son milieu un trou 62. L'agitateur mécanique est mobile en rotation autour d'un axe 10 de rotation. L'agitateur mécanique comprend une partie filiforme 11 disposée le long de l'axe 10 de rotation. Le haut de cette partie filiforme 1 1 est reliée au moteur 1 de manière à pouvoir être mise en rotation autour de l'axe 10 de rotation par le moteur 1. Attachée en bas de cette partie filiforme 11 à l'aide d'une vis 12 de manière à être solidaire de cette partie filiforme 11, se trouve une plaquette 8 qui est rectangulaire et pleine. Attaché vers le milieu de cette partie filiforme 11 par soudure de manière à être solidaire de cette partie filiforme 11, se trouve le trapèze 7 qui est plan et troué. Le trapèze 7 est constitué par trois barres horizontales 70, 71 et 72, reliées ensemble par des barres 73 et 74 qui leur sont obliques. Les barres 70, 71, 72, 73 et 74 sont toutes situées dans un même plan qui est ici le plan de la figure 2. Les barres obliques 73 et 74 sont au voisinage de la paroi périphérique 21 de la trémie 2 de manière à empêcher un tassement de la poudre 20 contre la paroi 21. Les endroits notés 75 sont des trous. Le plan du trapèze troué 7 est perpendiculaire au plan de la plaquette 8 qui est rectangulaire et pleine. L'agitateur mécanique est constitué par la partie filiforme 11, par le trapèze plan troué 7 et par la plaquette 8, auxquels s'ajoutent bien sûr les éléments de fixation tels que soudures ou vis 12 par exemple.

La poudre 20 est introduite dans la trémie 2 par l'orifice formé par l'ouverture de la partie rabattable 30 du couvercle 3. La poudre 20 peut être introduite manuellement. La poudre 20 tombe par gravité dans la trémie 2 par les trous 25 de la grille 24. La poudre 20 glisse le long de la paroi périphérique 21 de la trémie 2. L'agitateur mécanique a été mis en mouvement par le moteur 1. La partie filiforme 11, le trapèze troué 7 et la plaquette 8 tournent autour de l'axe 10 de rotation suivant la flèche f2 ou en sens inverse. Le mouvement rotatif de l'agitateur mécanique aide la poudre 20 à descendre par gravité de haut en bas dans la trémie 2 jusqu'à arriver dans l'alésage 27 de la bague 22 et ensuite traverser la grille 9 pour tomber dans le tube 4 jusqu'à arriver sur les éléments 5 de câble par gravité. La poudre 20 a cheminé de haut en bas par gravité aidée seulement par le mouvement rotatif de l'agitateur mécanique à l'intérieur de la trémie 2 avant la traversée de la grille 9 qui a été facilitée par ledit mouvement rotatif de l'agitateur mécanique.

La figure 2A représente schématiquement en vue de dessus l'élément 61 de la figure 2. C'est une rondelle 61 circulaire comprenant un trou 62 en son milieu par lequel passe la poudre juste après la traversée de la grille 9.

La figure 2B représente schématiquement en vue de dessus l'élément 9 de la figure 2. La grille 9 est constituée de fils 90 tissées et entrelacés de manière à former des trous 91 par lesquels s'écoule la poudre lors de la traversée de la grille 9.

La trémie 2 est en forme de cône droit de révolution, cette forme étant la meilleure pour faciliter l'écoulement de la poudre 20 dans la trémie 2 sans tassements de la poudre 20, tassements qui se produiraient si la forme de la paroi 21 était bombée vers l'intérieur ou vers l'extérieur. De manière préférentielle, le demi-angle du cône est compris entre 20 degrés et 35 degrés. En effet, si le demi-angle du cône est trop élevé, par exemple de l'ordre de 60 degrés, la poudre aura plus de mal à descendre par gravité et aura tendance à rester le long de la paroi 21, tandis que si le demi-angle est trop faible, par exemple de l'ordre de 10 degrés, la poudre aura tendance à être tassée sur elle-même et aura plus de mal à s'écouler par gravité. Cette fourchette angulaire facilite beaucoup l'écoulement de la poudre par gravité. Le demi-angle du cône vaut avantageusement environ 30 degrés.

Une partie de l'agitateur mobile en rotation est située dans la partie conique de la trémie 2 et est en forme de trapèze 7 plan troué. Cette forme 7 en trapèze plan est optimale dans la mesure où elle permet de remuer toute la poudre située dans la partie basse de la trémie 2. Cette forme 7 est trouée de manière à ne pas nécessiter un couple trop important, ce qui nécessiterait sinon une partie filiforme 11 très solide et un moteur 1 puissant. Cependant, d'autres formes pourraient être envisagées, mais donneraient de moins bons résultats. Le trapèze 7 plan troué est préférentiellement constitué de trois barres 70, 71 et 72 parallèles entre elles et reliées entre elles par deux barres 73 et 74 qui leur sont obliques. La présence de la barre intermédiaire 71 permet d'éviter la formation d'une masse compacte de poudre à l'intérieur du trapèze 7, masse compacte qui rendrait plus difficile l'écoulement de la poudre par gravité.

L'extrémité de l'agitateur située du côté de la petite ouverture de la trémie 2 est de préférence une plaquette 8 qui rectangulaire et pleine. La quantité de poudre étant bien moindre au voisinage de la plaquette 8 qu'au voisinage du trapèze 7, la plaquette 8 peut être pleine, remuant à chaque tour l'intégralité de la poudre située à son voisinage. La plaquette 8 rectangulaire a une forme adaptée à l'alésage 27 de la bague 2 dans laquelle elle se trouve, tandis que le trapèze 7 a une forme adaptée à l'intérieur conique de la trémie 2. La plaquette 8 est préférentiellement en plastique résistant à l'abrasion, car étant préférentiellement en contact avec la grille 9, il est avantageux qu'elle soit relativement souple et résistante à l'abrasion. Le plastique est par exemple du polyacétal.

La grille 9 est de préférence une toile grillagée flexible. Ainsi, lorsque la toile 9 est en contact avec la plaquette 8, la plaquette 8 peut être en légère pression constante sur la toile 9, ceci permettant à la plaquette 8 de racler facilement et efficacement la toile 9 de façon à éviter à la poudre de boucher les trous 91 de la toile 9 et ainsi de faciliter l'écoulement de la poudre lors de la traversée de la toile 9. La toile 9 est avantageusement métallique, ce qui augmente sa résistance pour ne pas s'effondrer sous le poids de la poudre qui pèse sur elle. La toile est par exemple en inox, d'où notamment l'intérêt pour le plastique de la plaquette 8 d'être résistant à l'abrasion. La toile est par exemple constituée de fils 90 tissés de diamètre valant environ 0.4mm. Le contact permanent, par légère pression, conservé entre la plaquette 8 et la grille 9 facilite beaucoup la traversée de la grille 9 par la poudre ; pour cela, il est très utile que la plaquette 8 comme la grille 9 soient légèrement déformables. La grille 9 est avantageusement démontable pour pouvoir être remplacée en cas d'usure, ce qui arrive toutefois rarement.

La petite ouverture de la trémie 2 se termine de préférence par une bague 22 présentant un alésage 27 cylindrique. La bague 22 est par exemple en acier. La différence entre la longueur de la plaquette 8 qui est parallèle au diamètre de l'alésage 27 et le diamètre de l'alésage 27 lui-même est préférentiellement d'une part suffisamment importante pour que l'agitateur soit autocentré par rapport à son axe 10 de rotation et d'autre part suffisamment faible pour éviter que la poudre se tasse contre les parois de l'alésage 27. Ladite différence entre ladite longueur et ledit diamètre vaut avantageusement environ 0.5mm. Ladite longueur est située dans un plan perpendiculaire au plan de la figure 2.

L'applicateur comprend de préférence un moteur 1 à vitesse variable. Le moteur 1 peut ainsi s'adapter à fournir différents débits de poudre sur les éléments 5 de câble selon leur besoin. Plus le nombre et la taille des éléments 5 de câble augmentera, et par conséquent plus le diamètre final du câble obtenu augmentera, plus la vitesse angulaire en tours par minute du moteur 1 devra augmenter. Le moteur 1 comprend par exemple un variateur de type potentiomètre permettant de régler sa vitesse. Le moteur 1 est avantageusement démontable.

L'applicateur comprend, en aval de la grille 9, un tube 4 coaxial avec la trémie 2 et destiné à guider la poudre entre la grille 9 et les éléments 5 de câble. Le diamètre du tube 4 est de préférence pas trop important de manière à éviter de disperser la poudre hors d'une zone utile située au voisinage immédiat des éléments 5 de câble. Le diamètre du tube 4 est avantageusement inférieur à 100mm. Le diamètre du tube 4 vaut par exemple environ 50mm. Les parois internes du tube 4 sont avantageusement lisses de manière à éviter que la poudre ne s'y accroche. Selon le type d'application envisagée, d'autres formes de guide qu'un tube pourraient être envisagées, mais le tube est la forme la plus efficace et la plus simple.

L'applicateur comprend de préférence un couvercle 3 qui est démontable et qui présente une ouverture rabattable 30 couvrant la grand ouverture grillagée 24 de la trémie 2. La poudre peut ainsi être approvisionnée manuellement.

Lors de la mise en oeuvre du procédé d'application selon l'invention, l'applicateur utilisé est de préférence monté sur un support 6 pivotant qui est angulairement escamotable. En fait, le support 6 à proprement parlé est monté sur un pied 6 qui est pivotant. Ainsi, les différentes manoeuvres lors de la mise en oeuvre du procédé sont facilitées et nécessitent moins de place.

La poudre utilisée est de préférence du talc. Ce pourrait également être par exemple une poudre de graphite ou bien une poudre de PTFE. La vitesse du moteur 1 ainsi que le diamètre des trous 91 de la grille 9 sont préférentiellement adaptés à chaque type de poudre utilisée.

Les éléments 5 de câble concernent de préférence un câble à fibres optiques. La poudre est alors préférentiellement appliquée avant le comètage. Dans un exemple préférentiel de câble à fibres optiques selon l'invention, des mèches de renfort sortent d'une cage tournante et progressent par un mouvement en hélice. A l'intérieur de ces mèches, des tubes à fibres optiques, par exemple de type flextubes, sortent d'une cage tournante et progressent par un mouvement en SZ. A l'intérieur des tubes à fibres optiques, une âme centrale défile linéairement. L'espace utile avant comètage s'étend sur environ 70mm, ce qui rend l'applicateur selon l'invention très utile car il suffit alors de choisir pour cela un diamètre de tube 4 guidant la poudre valant moins de 70mm, par exemple environ 50mm. En dehors de cet espace, les mèches sont déjà trop resserrées et la poudre ne peut plus passer entre les mèches et tomber sur les tubes à fibres optiques. Le cylindre long de 600mm de l'art antérieur aurait nécessité beaucoup plus de place pour pouvoir être mis en place. Le câble à fibres optiques peut comprendre plus de 20 tubes à fibres optiques contenant chacun plusieurs fibres optiques et étant destinés à recevoir la poudre, et même jusqu'à par exemple 24 tubes à fibres optiques.

L'agitateur est mobile en rotation et il tourne à une vitesse valant de préférence plusieurs centaines de tours par minute, allant par exemple de 100 à 500 tours par minute selon le diamètre du câble réalisé.

Le débit de poudre qui peut être obtenu est de préférence supérieur à 200 grammes par minute et peut aller jusqu'à par exemple environ 400 grammes par minute. Le moteur 1 à vitesse variable permet ainsi de régler très simplement le débit de poudre. Un applicateur selon l'art antérieur ne peut fournir qu'environ 60 grammes par minute. Par conséquent, avec des câbles de diamètre important, l'applicateur selon l'invention, grâce à un débit préférentiellement élevé peut être utilisé tout en faisant défiler le câble à une vitesse relativement élevée tandis que la vitesse de défilement aurait été nettement plus lente avec un applicateur selon l'art antérieur. Par exemple pour un câble présentant un diamètre de 13mm et possédant 24 flextubes, la vitesse de défilement peut être de 50 mètres par minute, ce qui est élevé.

La poudre tombant sur les éléments 5 de câble sans y rester accrochée est de préférence récupérée dans un réceptacle situé sous les éléments 5 de câble. Ainsi, cette poudre peut être réutilisée, ce qui est toutefois financièrement relativement peu intéressant compte-tenu du bas prix de la poudre qui est par exemple du talc. Mais surtout, la poudre qui n'est pas restée accrochée sur les éléments 5 de câble tomberait sans cela par terre et risquerait de se disperser au voisinage immédiat de l'applicateur, ce qu'il est avantageux d'éviter.

## Revendications

1. Applicateur de poudre absorbant l'humidité, sur des éléments (5) de câble, comprenant,
une trémie en forme de cône droit de révolution (2) destinée à contenir la poudre (20), ladite trémie (2) comprenant une petite ouverture située dans sa partie basse,
une grille (9) située dans la petite ouverture de la trémie (2),
un agitateur mécanique de poudre situé à l'intérieur de la trémie (2), l'agitateur étant mobile en rotation par rapport à la trémie (2) autour d'un axe (10) de rotation,
l'agitateur étant disposé dans la trémie (2) de manière à pouvoir faire écouler la poudre à travers la grille (9) par gravité,
un tube (4) située en aval de la grille et coaxial avec la trémie, ledit tube étant destiné à guider la poudre entre la grille (9) et les éléments (5) de câble, laquelle poudre, ayant traversé la grille (9), est véhiculée dans le tube par gravité jusqu'aux éléments (5) de câble,
**caractérisé en ce que** l'agitateur comprend deux parties (7,8) solidaires entre elles et angulairement décalées entre elles, lesdites parties étant disposées de manière à ce qu'une partie (7) soit apte à remuer la poudre (20) destinée à être contenue dans la trémie (2) et à ce que l'autre partie (8) soit apte à fluidifier l'écoulement de la poudre (20) au niveau de la grille (9).

2. Applicateur selon la revendication 1, **caractérisé en ce que** l'extrémité (8) de l'agitateur située du côte de la petite ouverture de la trémie (2) est mobile par rapport à la grille (9), en contact avec la grille (9) et disposée de manière à pouvoir racler la grille (9) de façon à aider la poudre à traverser la grille (9) par gravité.

3. Applicateur selon l'une quelconque des revendications précédentes, **caractérisé en ce que** l'agitateur comprend deux parties planes (7, 8) mobiles en rotation autour de l'axe (10) de rotation, solidaires entre elles et perpendiculaires entre elles.

4. Applicateur selon l'une quelconque des revendications précédentes, **caractérisé en ce que** le demi-angle du cône est compris entre 20 degrés et 35 degrés.

5. Applicateur selon la revendication 4, **caractérisé en ce que** le demi-angle du cône vaut environ 30 degrés.

6. Applicateur selon l'une quelconque des revendications précédentes, **caractérisé en ce que** une partie (7) de l'agitateur mobile en rotation est située dans la partie conique de la trémie (2) et est en form de trapèze (7) plan troué.

7. Applicateur selon la revendication 6, **caractérisé en ce que** le trapèze (7) plan troué est constitué de trois barres (70, 71, 72) parallèles entre elles et reliées entre elles par deux barres (73, 74) qui leur sont obliques.

8. Applicateur selon l'une quelconque des revendications précédentes, **caractérisé en ce que** l'extrémité (8) de l'agitateur située du côté de la petite ouverture de la trémie (2) est une plaquette (8) rectangulaire pleine.

9. Applicateur selon la revendication 8, **caractérisé en ce que** la plaquette (8) est en plastique résistant à l'abrasion.

10. Applicateur, selon la revendication 9, **caractérisé en ce que** le plastique est du polyacétal.

11. Applicateur selon l'une quelconque des revendications précédentes, **caractérisé en ce que** la grille (9) est une toile (9) grillagée flexible.

12. Applicateur selon la revendication 11, **caractérisé en ce que** la toile (9) est métallique.

13. Applicateur selon la revendication 11 ou 12, **caractérisé en ce que** la toile (9) est constituée de fils (90) tissés de diamètre valant environ 0.4mm.

14. Applicateur selon la revendication 8 et selon revendication 11, **caractérisé en ce que** la plaquette (8) est en légère pression constante sur la toile (9).

15. Applicateur selon l'une quelconque des revendications précédentes, **caractérisé en ce que** la petite ouverture de la trémie (2) se termine par une bague (22) présentant un alésage (27) cylindrique.

16. Applicateur selon la revendication 10 et selon la revendication 15, **caractérisé en ce que** la différence entre la longueur de la plaquette (8) parallèle au diamètre de l'alésage (27) et le diamètre de l'alésage (27) est d'une part suffisamment importante pour qeu l'agitateur soit autocentré par rapport à son axe (10) de rotation et d'autre part suffisamment faible pour éviter que la poudre se tasse contre les parois de l'alésage (27).

17. Applicateur selon la revendication 16, **caractérisé en ce que** la différence entre ladite longueur et ledit diamètre vaut environ 0.5 mm.

18. Applicateur selon l'une quelconque des revendications précédentes, **caractérisé en ce que** la grille (9) est démontable.

19. Applicateur selon l'une quelconque des revendications précédentes, **caractérisé en ce que** l'applicateur comprend un moteur (1) démontable à vitesse variable.

20. Applicateur selon l'une quelconque des revendications précédentes, **caractérisé en ce que** les parois internes du tube (4) sont lisses.

21. Applicateur selon l'une quelconque des revendications précédentes, **caractérisé en ce que** le diamètre du tube (4) est inférieure à 100 mm.

22. Applicateur selon la revendication 21, **caractérisé en ce que** le diamètre du tube (4) vaut environ 50 mm.

23. Applicateur selon l'une quelconque des revendications précédentes, **caractérisé en ce que** l'applicateur comprend un couvercle (3) démontable avec ouverture rabattable (30) couvrant la grand ouverture grillagée (24) de la trémie (2).

24. Procédé d'application de poudre absorbant l'humidité, sur des éléments (5) de câble, le procédé comprenant
une étape de mise de la poudre dans une trémie (2) en forme de cône droit de révolution d'un applicateur, ladite trémie (2) comprenant une petite ouverture située dans sa partie basse
et une étape de mise en mouvement d'un agitateur mécanique situé à l'intérieur de la trémie (2) de l'applicateur, l'agitateur étant mobile en rotation par rapport à la trémie (2) autour d'un axe (10) de rotation,
et la poudre (20) contenue dans la trémie (2),
s'écoule par gravité jusqu'à une grille (9) située dans la petite ouverture de la trémie (2) en étant agitée par l'agitateur,
traverse la grille (9),
et continue de s'écouler la poudre par un tube (4) située en aval de la grille et coaxial avec la trémie, ledit tube étant destiné à guider le poudre entre la grille (9) et les éléments (5) de câble, laquelle poudre est véhiculée dans le tube uniquement par gravité jusqu'à arriver au contact des éléments (5) de câble
**caractérisé en ce que** l'agitateur comprend deux parties (7,8) solidaires entre elles et angulairement décalées entre elles, lesdites parties étant disposées de manière à ce qu'une partie (7) soit apte à remuer la poudre (20) destinée à être contenue dans la trémie (2) et à ce que l'autre partie (8) soit apte 's fluidifier l'écoulement de la poudre (20) au niveau de la grille (9).

25. Procédé d'application selon la revendication 24, **caractérisé en ce que** le procédé utilise l'applicateur selon l'une quelconque des revendications 1 à 23.

26. Procédé d'application selon la revendication 25, **caractérisé en ce que** l'applicateur est monté sur un support (6) pivotant qui est angulairement escamotable.

27. Procédé d'application selon l'une quelconque des revendications 24 à 26, **caractérisé en ce que** la poudre est du talc.

28. Procédé d'application selon l'une quelconque des revendications 24 à 27, **caractérisé en ce que** le câble est un câble à fibres optiques.

29. Procédé d'application selon la revendication 28, **caractérisé en ce que** le câble à fibres optiques comprend plus de 20 tubes contenant chacun plusieurs fibres optiques et étant destinés à recevoir la poudre.

30. Procédé d'application selon l'une quelconque des revendications 24 à 29, **caractérisé en ce que** l'agitateur est mobile en rotation et tourne à une vitesse valant plusieurs centaines de tours par minute.

31. Procédé d'application selon l'une quelconque des revendications 24 à 30, **caractérisé en ce que** le débit de poudre est supérieur à 200 grammes par minute.

32. Procédé d'application selon la revendication 31, **caractérisé en ce que** le débit de poudre vaut environ 400 grammes par minute.

33. Procédé d'application selon l'une quelconque des revendications 24 à 32, **caractérisé en ce que** la poudre tombant sur les éléments (5) de câble sans y rester accrochée est récupérée dans un réceptacle situé sous les éléments (5) de câble.

## Claims

1. Applicator of moisture-absorbing powder to cable elements (5), comprising
a hopper (2) in the shape of a right cone of revolution provided for containing the powder (20), said hopper (2) including a small opening located in its bottom part,
a screen (9) located in the small opening in the hopper (2),
a mechanical powder stirrer located inside the hopper (2), the stirrer being rotatable with respect to the hopper (2) around an axis (10) of rotation,
the stirrer being arranged in the hopper (2) so as to be capable of causing the powder to flow through the screen (9) under gravity,
a tube (4) located downstream of the screen and coaxial with the hopper, said tube being provided for guiding the powder between the screen (9) and the cable elements (5), which powder, having passed through the screen (9), is transported in the tube to the cable elements (5) under gravity,
**characterised in that** the stirrer has two parts (7, 8) fixed to one another and angularly offset from one another, said parts being arranged so that one part (7) is capable of stirring the powder (20) which the hopper (2) is to contain and so that the other part (8) is capable of fluidising the flow of powder (20) at the level of the screen (9).

2. Applicator according to claim 1, **characterised in that that** end (8) of the stirrer which is located beside the small opening in the hopper (2) is capable of moving with respect to the screen (9), in contact with the screen (9), and is arranged so as to be able to scrape the screen (9) so as to help the powder to pass through the screen (9) under gravity.

3. Applicator according to any one of the preceding claims, **characterised in that** the stirrer has two planar parts (7, 8) rotatable about the axis (10) of rotation, which are fixed to one another and perpendicular to one another.

4. Applicator according to any one of the preceding claims, **characterised in that** the half angle of the cone is between 20 degrees and 35 degrees inclusive.

5. Applicator according to claim 4, **characterised in that** the half angle of the cone is about 30 degrees.

6. Applicator according to any one of the preceding claims, **characterised in that** one rotatable part (7) of the stirrer is located in the conical portion of the hopper (2) and is in the shape of a planar apertured trapezium (7).

7. Applicator according to claim 6, **characterised in that** the planar apertured trapezium (7) is formed of three bars (70, 71, 72) parallel to one another and connected to one another by two bars (73, 74) oblique thereto.

8. Applicator according to any one of the preceding claims, **characterised in that** the end (8) of the stirrer located beside the small opening in the hopper (2) is a plate (8) in the shape of a solid rectangle.

9. Applicator according to claim 8, **characterised in that** the plate (8) is made of abrasion-resistant plastics material.

10. Applicator according to claim 9, **characterised in that** the plastics material is polyacetal.

11. Applicator according to any one of the preceding claims, **characterised in that** the screen (9) is a flexible openwork material (9).

12. Applicator according to claim 11, **characterised in that** the material (9) is made of metal.

13. Applicator according to claim 11 or 12, **characterised in that** the material (9) is formed of woven filaments (90) having a diameter of about 0.4 mm.

14. Applicator according to claim 8 and according to claim 11, **characterised in that** the plate (8) is in light constant pressure on the cloth (9).

15. Applicator according to any one of the preceding claims, **characterised in that** the small opening in the hopper (2) terminates in a collar (22) having a cylindrical bore (27).

16. Applicator according to claim 10 and according to claim 15, **characterised in that** the difference between the length of the plate (8) parallel to the diameter of the bore (27) and the diameter of the bore (27) is, on the one hand, sufficiently large for the stirrer to be self-centring relative to its axis (10) of rotation and, on the other hand, sufficiently small to avoid the powder being compacted against the walls of the bore (27).

17. Applicator according to claim 16, **characterised in that** the difference between said length and said diameter is about 0.5 mm.

18. Applicator according to any one of the preceding claims, **characterised in that** the screen (9) is demountable.

19. Applicator according to any one of the preceding claims, **characterised in that** the applicator includes a demountable variable-speed motor (1).

20. Applicator according to any one of the preceding claims, **characterised in that** the inside walls of the tube (4) are smooth.

21. Applicator according to any one of the preceding claims, **characterised in that** the diameter of the tube (4) is less than 100 mm.

22. Applicator according to claim 21, **characterised in that** the diameter of the tube (4) is about 50 mm.

23. Applicator according to any one of the preceding claims, **characterised in that** the applicator includes a demountable cover (3) having an opening (30) that can be pivoted down, covering the large openwork opening (24) of the hopper (2).

24. Method of applying moisture-absorbing powder to cable elements (5), the method comprising
a step of placing the powder in a hopper (2), in the shape of a right cone of revolution, of an applicator, said hopper (2) including a small opening located in its bottom part
and a step of causing a mechanical stirrer located inside the hopper (2) of the applicator to move, the stirrer being rotatable with respect to the hopper (2) around an axis (10) of rotation,
and the powder (20) contained in the hopper (2)
flowing under gravity to a screen (9) located in the small opening in the hopper (2) whilst being stirred by the stirrer,
passing through the screen (9)
and the powder continuing to flow through a tube (4) located downstream of the screen and coaxial with the hopper, said tube being provided for guiding the powder between the screen (9) and the cable elements (5), said powder being transported in the tube solely under gravity until it comes into contact with the cable elements (5),
**characterised in that** the hopper (2) is in the shape of a right cone of revolution and **in that** the stirrer has two parts (7, 8) fixed to one another and angularly offset from one another, said parts being arranged so that one part (7) is capable of stirring the powder (20) which the hopper (2) is to contain and so that the other part (8) is capable of fluidising the flow of powder (20) at the level of the screen (9).

25. Method of application according to claim 24, **characterised in that** the method uses the applicator according to any one of claims 1 to 23.

26. Method of application according to claim 25, **characterised in that** the applicator is mounted on a pivoting support (6) which is angularly retractable.

27. Method of application according to any one of claims 24 to 26, **characterised in that** the powder is talc.

28. Method of application according to any one of claims 24 to 27, **characterised in that** the cable is an optical fibre cable.

29. Method of application according to claim 28, **characterised in that** the optical fibre cable comprises more than 20 tubes, each of which contains a plurality of optical fibres and is to receive the powder.

30. Method of application according to any one of claims 24 to 29, **characterised in that** the stirrer is rotatable and rotates at a speed of several hundred revolutions per minute.

31. Method of application according to any one of claims 24 to 30, **characterised in that** the powder flow rate is more than 200 grams per minute.

32. Method of application according to claim 31, **characterised in that** the powder flow rate is about 400 grams per minute.

33. Method of application according to any one of claims 24 to 32, **characterised in that** the powder dropping onto the cable elements (5) without remaining caught thereon is recovered in a receptacle located beneath the cable elements (5).

## Patentansprüche

1. Applikator für feuchtigkeitsabsorbierendes Puder auf Kabelelemente (5), umfassend
einen Trichter (2) in Form eines geraden Rotationskegels, welcher bestimmt ist, das Puder (20) zu enthalten, wobei der Trichter (2) eine in seinem unteren Abschnitt angeordnete kleine Öffnung umfasst,
ein in der kleinen Öffnung des Trichters (2) angeordnetes Gitter (9),
ein mechanisches Rührwerk für Puder, welches im Inneren des Trichters (2) angeordnet ist, wobei das Rührwerk bezüglich des Trichters (2) um eine Drehachse (10) drehbeweglich ist,
wobei das Rührwerk in dem Trichter (2) in einer Weise angeordnet ist, bewirken zu können, dass das Puder über das Gitter (9) durch die Schwerkraft abfließt,
eine dem Gitter koaxial mit dem Trichter nachgelagerte Röhre (4), wobei die Röhre dazu bestimmt ist, das Puder zwischen dem Gitter (9) und den Kabelelementen (5) zu führen, wobei das Puder, wenn es durch das Gitter (9) hindurchgegangen ist, in der Röhre durch Schwerkraft bis zu den Kabelelementen (5) befördert wird,
**dadurch gekennzeichnet, dass** das Rührwerk zwei miteinander verbundene und winkelmäßig zueinander versetzte Abschnitte (7, 8) umfasst, wobei die Abschnitte in einer Weise angeordnet sind, dass ein Abschnitt (7) geeignet ist, das Puder (20), welches bestimmt ist, in dem Trichter (2) enthalten zu sein, umzurühren, und dass der andere Abschnitt (8) geeignet ist, den Durchfluss des Puders (20) auf Ebene des Gitters (9) flüssiger zu gestalten.

2. Applikator gemäß Anspruch 1, **dadurch gekennzeichnet, dass** das neben der kleinen Öffnung des Trichters (2) angeordnete Ende (8) des Rührwerks bezüglich des Gitters (9) in Kontakt mit dem Gitter (9) beweglich ist und in einer Weise angeordnet ist, das Gitter (9) in einer Weise schaben zu können, dem Puder zu helfen, bedingt durch die Schwerkraft durch das Gitter (9) hindurchzugehen.

3. Applikator gemäß einem der vorhergehenden Ansprüche, **dadurch gekennzeichnet, dass** das Rührwerk zwei um die Drehachse (10) drehbewegliche ebene Abschnitte (7, 8) umfasst, welche miteinander verbunden sind und zueinander senkrecht sind.

4. Applikator gemäß einem der vorhergehenden Ansprüche, **dadurch gekennzeichnet, dass** der Halbwinkel des Kegels zwischen 20° und 35° enthalten ist.

5. Applikator gemäß Anspruch 4, **dadurch gekennzeichnet, dass** der Halbwinkel des Kegels einen Wert von ungefähr 30° aufweist.

6. Applikator gemäß einem der vorhergehenden Ansprüche, **dadurch gekennzeichnet, dass** ein Teil (7) des drehbeweglichen Rührwerks in dem kegelförmigen Abschnitt des Trichters (2) angeordnet ist und die Form eines durchlöcherten ebenen Trapezes (7) aufweist.

7. Applikator gemäß Anspruch 6, **dadurch gekennzeichnet, dass** das durchlöcherte ebene Trapez (7) aus drei zueinander parallelen Stangen (70, 71, 72), welche miteinander durch zwei Stangen (73, 74), welche zu ersteren schräg stehen, verbunden sind, besteht.

8. Applikator gemäß einem der vorhergehenden Ansprüche, **dadurch gekennzeichnet, dass** das neben der kleinen Öffnung des Trichters (2) angeordnete Ende (8) des Rührwerks ein massives rechteckförmiges Plättchen (8) ist.

9. Applikator gemäß Anspruch 8, **dadurch gekennzeichnet, dass** das Plättchen (8) aus abriebfestem Kunststoff ist.

10. Applikator gemäß Anspruch 9, **dadurch gekennzeichnet, dass** der Kunststoff Polyacetal ist.

11. Applikator gemäß einem der vorhergehenden Ansprüche, **dadurch gekennzeichnet, dass** das Gitter ein flexibles Gittergewebe (9) ist.

12. Applikator gemäß Anspruch 11, **dadurch gekennzeichnet, dass** das Gewebe (9) metallisch ist.

13. Applikator gemäß Anspruch 11 oder 12, **dadurch gekennzeichnet, dass** das Gewebe (9) aus verwobenen Fäden (90) mit Durchmesser von etwa 0,4 mm gebildet ist.

14. Applikator gemäß Anspruch 8 und gemäß Anspruch 11, **dadurch gekennzeichnet, dass** das Plättchen (8) einen konstanten leichten Druck auf das Gewebe (9) ausübt.

15. Applikator gemäß einem der vorhergehenden Ansprüche, **dadurch gekennzeichnet, dass** die kleine Öffnung des Trichters (2) in einem Ring endet, welcher eine zylindrische Bohrung (27) aufweist.

16. Applikator gemäß Anspruch 10 und gemäß Anspruch 15, **dadurch gekennzeichnet, dass** der Unterschied zwischen der Länge des Plättchens (8) parallel zum Durchmesser der Bohrung (27) und dem Durchmesser der Bohrung (27) auf der einen Seite genügend groß ist, dass das Rührwerk bezüglich seiner Drehachse (10) autozentriert wird, und auf der anderen Seite hinreichend gering ist, um zu vermeiden, dass das Puder sich gegen die Wände der Bohrung (27) zusammendrückt.

17. Applikator gemäß Anspruch 16, **dadurch gekennzeichnet, dass** der Unterschied zwischen der Länge und dem Durchmesser etwa 0,5 mm beträgt.

18. Applikator gemäß einem der vorhergehenden Ansprüche, **dadurch gekennzeichnet, dass** das Gitter (9) demontierbar ist.

19. Applikator gemäß einem der vorhergehenden Ansprüche, **dadurch gekennzeichnet, dass** der Applikator einen demontierbaren Motor (1) mit variabler Geschwindigkeit aufweist.

20. Applikator gemäß einem der vorhergehenden Ansprüche, **dadurch gekennzeichnet, dass** die Innenwände der Röhre (4) glatt sind.

21. Applikator gemäß einem der vorhergehenden Ansprüche, **dadurch gekennzeichnet, dass** der Durchmesser der Röhre (4) kleiner als 100 mm ist.

22. Applikator gemäß Anspruch 21, **dadurch gekennzeichnet, dass** der Durchmesser der Röhre (4) ungefähr 50 mm beträgt.

23. Applikator gemäß einem der vorhergehenden Ansprüche, **dadurch gekennzeichnet, dass** der Applikator einen demontierbaren Deckel (3) mit einer klappbaren Öffnung (30) umfasst, welche die große vergitterte Öffnung (24) des Trichters (2) bedeckt.

24. Verfahren zum Applizieren von feuchtigkeitsabsorbierendem Puder auf Kabelelemente (5), wobei das Verfahren umfasst: einen Schritt des Einbringens des Puders in einen Trichter (2), welcher die Form eines geraden Rotationskegels aufweist, eines Applikators, wobei der Trichter (2) eine an seinem unteren Abschnitt liegende kleine Öffnung umfasst,
und einen Schritt des Inbewegungsetzens eines mechanischen Rührwerks, welches im Inneren des Trichters (2) des Applikators angeordnet ist, wobei das Rührwerk bezüglich des Trichters (2) um eine Drehachse (10) drehbeweglich ist,
wobei das in dem Trichter (2) enthaltene Puder (20) durch Schwerkraft bis zu einem in der kleinen Öffnung des Trichters (2) angeordneten Gitters (9) fließt, wenn es durch das Rührwerk gerührt wird,
durch das Gitter (9) hindurchgeht,
und das Puder fortfährt, durch eine Röhre (4) zu fließen, welche dem Gitter nachgeschaltet ist und welche koaxial zu dem Trichter ist, wobei die Röhre dazu bestimmt ist, das Puder zwischen dem Gitter (9) und den Kabelelementen (5) zu führen, wobei das Puder in der Röhre ausschließlich durch Schwerkraft befördert wird, bis es in Kontakt mit den Kabelelementen (5) ankommt,
**dadurch gekennzeichnet, dass** das Rührwerk zwei miteinander verbundene und winkelmäßig zueinander versetzte Abschnitte (7, 8) aufweist, wobei die Abschnitte in einer Weise angeordnet sind, dass ein Abschnitt (7) geeignet ist, das Puder (20), welches dazu bestimmt ist, in dem Trichter (2) enthalten zu sein, umzurühren, und dass der andere Abschnitt (8) geeignet ist, den Durchfluss des Puders (20) auf Ebene des Gitters (9) flüssiger zu gestalten.

25. Verfahren zum Applizieren gemäß Anspruch 24, **dadurch gekennzeichnet, dass** das Verfahren den Applikator gemäß einem der Ansprüche 1-23 benutzt.

26. Verfahren zum Applizieren gemäß Anspruch 25, **dadurch gekennzeichnet, dass** der Applikator auf einem Schwenkträger (6) angebracht ist, welcher winkelmäßig einziehbar ist.

27. Verfahren zum Applizieren gemäß einem der Ansprüche 24-26, **dadurch gekennzeichnet, dass** das Puder Talkumpuder ist.

28. Verfahren zum Applizieren gemäß einem der Ansprüche 24-27, **dadurch gekennzeichnet, dass** das Kabel ein Kabel mit optischen Fasern ist.

29. Verfahren zum Applizieren gemäß Anspruch 28, **dadurch gekennzeichnet, dass** das Kabel mit optischen Fasern mehr als 20 Röhren umfasst, welche jeweils eine Vielzahl von optischen Fasern enthalten und welche dazu bestimmt sind, das Puder zu empfangen.

30. Verfahren zum Applizieren gemäß einem der Ansprüche 24-29, **dadurch gekennzeichnet, dass** das Rührwerk drehbeweglich ist und sich mit einer Geschwindigkeit von mehreren hundert Umdrehungen pro Minute dreht.

31. Verfahren zum Applizieren gemäß einem der Ansprüche 24-30, **dadurch gekennzeichnet, dass** der Durchsatz des Puders größer als 200 Gramm pro Minute ist.

32. Verfahren zum Applizieren gemäß Anspruch 31, **dadurch gekennzeichnet, dass** der Durchsatz des Puders ungefähr 400 Gramm pro Minute beträgt.

33. Verfahren zum Applizieren gemäß einem der Ansprüche 24-32, **dadurch gekennzeichnet, dass** das Puder, welches auf die Kabelelemente (5) fällt, ohne dort festgemacht zu verbleiben, in einem unter den Kabelelementen (5) angeordneten Behälter wiedergewonnen wird.
